# EUROPÄISCHE PATENTSCHRIFT

(11) **EP 2 286 978 B1**
(45) Veröffentlichungstag und Bekanntmachung des Hinweises auf die Patenterteilung: **26.03.2014**
(21) Anmeldenummer: 10169221.8
(22) Anmeldetag: 12.07.2010
(51) Int. Cl.: B29C 49/42, B65G 11/20, B65G 47/14, B65G 47/68

(54) **Vorrichtung sowie Verfahren zum Zuführen von Preforms**
Device and process for supplying preforms
Dispositif et procédé destinés à l'amenée de préformes

(30) Priorität: 12.08.2009 DE 102009037200
(43) Veröffentlichungstag der Anmeldung: 23.02.2011
(73) Patentinhaber: Krones AG, 93073 Neutraubling (DE)
(72) Erfinder: Hüttner, Johann, 84066 Mallersdorf-Pfaffenberg (DE); Seger, Martin, 92318 Neumarkt i. d. Opf. (DE); Michel, Jörg, 95131 Schwarzenbach a. W. (DE)
(74) Vertreter: Grünecker, Kinkeldey, Stockmair & Schwanhäusser

(56) Entgegenhaltungen:
- WO-A1-2007/068129
- WO-A2-2007/131701
- WO-A2-2008/019836
- DE-A1- 3 910 522
- US-A- 4 550 820

## Beschreibung

Die Erfindung betrifft eine Vorrichtung zum Zuführen von Preforms gemäß dem Oberbegriff des Anspruchs 1 sowie ein Verfahren zum Zuführen von Preforms. Unter Preforms versteht man Vorformlinge aus thermoplastischem Kunststoff, aus denen in einer Blasmaschine ein Hohlkörper, z.B. eine Flasche oder Behälter, geblasen wird.

Beim gegenwärtigen Stand der Technik rutschen die Preforms aus einem Vorratscontainer über einen Übergabetrichter in einen Aufwärtsförderer. Von dort aus werden sie über einen Rollensortierer einer Blasmaschine zugeführt. Bei der Produktion der Flaschen kommt es jedoch immer wieder zu Ausschuss und qualitativ minderwertigen Flaschen.

In Zusammenhang mit der vorliegenden Erfindung wurde herausgefunden, dass Verunreinigungen die Ursache für das zuvor beschriebene Problem sind. Die Befüllung des Vorratscontainers erfolgt direkt schüttend aus den Lieferverpackungen. Hierbei wird auch Staub und Schmutz, so wie beim Transport abgetrennter Preformgrad, eingebracht. Diese Verschmutzungen werden gegenwärtig mit den Preforms zusammen in den Aufwärtsförderer getragen und können von dort bis zur Blasmaschine gelangen. Durch den langen Kontakt mit den feinen Verschmutzungspartikeln werden die Preforms verunreinigt, was beim späteren Blasvorgang zu qualitativ minderwertigen Flaschen führen kann. Es ist auch möglich, dass hergestellte Preforms direkt nach ihrer Herstellung über eine Transporteinrichtung einem Vorratscontainer bzw. einem Silo zugeführt werden. Dieser Silo wird dann beispielsweise zu einem anderen Werk zur Herstellung der Flaschen mittels Blasmaschine transportiert. Der Vorratscontainer bzw. Silo kann dann entweder in den Vorratscontainer geschüttet werden, oder aber selbst als Vorratscontainer aufgestellt werden, aus dem die Preforms abtransportiert werden. Auch hier wird, wie zuvor beschrieben, der Schmutz weiter zur Blasmaschine getragen.

Aus der US 4550820 A ist eine Vorrichtung bekannt, die Becher transportiert. Diese Transporteinrichtung weist mehrere nebeneinander angeordnete umlaufende Bänder auf, die einen bestimmten Abstand zueinander haben. Schließlich weist die Vorrichtung einen Aufwärtsförderer in Form eines Förderbands auf, auf den die Becher stehend nach oben transportiert werden.

Die WO 2007/131701 A2 beschreibt eine Rutsche für Preforms zur Blasmaschine. Diese Rutsche weist keine Durchgangsöffnungen auf, so dass Schmutz und Preformgrad nicht nach unten fallen kann.

Die DE 3910522 A1 lehrt eine Drehvorrichtung für einen Reinraum. Damit es bei einer Drehbewegung nicht zu einem Abgeben von Staubpartikeln an die Luft gibt (zum Beispiel beim Drehen einer Rollenbahn, nicht aber der einzelnen Rollen) ist deswegen die Drehvorrichtung in einem Gehäuse vorgesehen, an dem ein Unterdruck anliegt.

Die WO 2007/068129 A1 beschreibt eine Transporteinrichtung mit einem Aufrichtkanal, der einen V-förmigen Querschnitt aufweist sowie einen Spalt, wobei der Spalt die Tragringe der Preforms während ihres Durchgangs durch den Aufrichtkanal hält.

Aus der DE 20308513 U ist bereits eine Vorrichtung zum Zuführen von Vorformlingen zu einer Blasmaschine bekannt. Hier werden Vorformlinge am Boden eines Preformsilos mit Hilfe eines Schrägförderers zum oberen Ende eines Rollensortierers geführt.

Hiervon ausgehend liegt der vorliegenden Erfindung die Aufgabe zugrunde, eine Vorrichtung und ein Verfahren bereitzustellen, das eine Herstellung von qualitativ hochwertigen Erzeugnissen, insbesondere Flaschen, ermöglicht.

Erfindungsgemäß wird diese Aufgabe durch die Merkmale der Ansprüche 1 und 12 gelöst.

Erfindungsgemäß ist auf dem Transportweg der Preforms zur Blasmaschine eine geneigte Rutsche vorgesehen, die mehrere Durchgangsöffnungen aufweist. Auf dem "Transportweg" bedeutet auf einer Strecke oder Teilstrecke von einer Einrichtung zum Herstellen der Preforms zu der Blasmaschine.

Gemäß der vorliegenden Erfindung ist also z. B. zwischen dem Vorratscontainer und dem Abförderer eine geneigte Rutsche vorgesehen, die mehrere Durchgangsöffnungen aufweist. Die Preforms können also über die geneigte Rutsche zu dem Abförderer rutschen und in Richtung Blasmaschine weitertransportiert werden. Schmutz und Preformgrad kann durch die Durchtrittsöffnungen in der geneigten Rutsche nach unten fallen. Somit ist eine frühzeitige Beseitigung der Schmutzpartikel möglich. Daher wird qualitätsmindernder Schmutz und Preformgrad nicht mit zum Abförderer und somit nicht in Richtung Blasmaschine geführt. Die erfindungsgemäße Lösung kann einfach und kostengünstig realisiert werden. Es ist auch möglich, direkt nach der Herstellung der Preforms die geneigte Rutsche zwischen einem Zuförderer, der die Preforms von einer Herstellungseinrichtung der Preforms fördert, und einem Vorratscontainer für die Preforms, anzuordnen. D. h., dass die Verschmutzungspartikel bereits in dem Herstellungswerk für die Preforms entfernt werden können und somit nicht bis zur Blasmaschine weiter transportiert werden.

Gemäß der Erfindung ist die Rutsche zumindest teilweise als Gitter, insbesondere als Lochblech oder geschlitztes Blech ausgebildet. Eine derartige Rutsche kann sehr kostengünstig gefertigt werden. Der Schmutz kann auf einfache Art und Weise entweichen.

Vorteilhafterweise ist unterhalb der Rutsche eine Absaugung angeordnet. Die Absaugung verbessert das Ausbringen der Verschmutzung, indem sie die aufgrund statischer Ladung der Preforms induzierte Haftung der Verschmutzungspartikel überwindet. Der Schmutz kann durch die Absaugung aus der Vorrichtung entfernt werden.

In vorteilhafter Weise kann eine Rütteleinrichtung vorgesehen sein, die die Rutsche rüttelt, d.h. mechanisch hin und her und/oder auf und ab bewegt. Somit löst sich der an den Preforms anhaftende Schmutz besser von den Preforms und kann leichter nach unten durch die Rutsche hindurchfallen.

In einer Alternative gemäß der Erfindung sind die Durchgangsöffnungen zwischen drehbaren Rollen ausgebildet. Die Rollen können dabei frei drehbar oder angetrieben sein. Vorteilhaft bei dieser Lösung ist, dass die Preforms durch die Rollen aktiv bewegt werden, wodurch wiederum das Ausbringen von Schmutz aus dem Inneren der Preforms verbessert wird.

Vorteilhafterweise drehen sich die Rollen um eine Achse, die quer zur Transportrichtung der Preforms verläuft. Somit können die Rollen durch die herabrutschenden Preforms in Drehung versetzt werden, derart, dass kein gesonderter Rollenantrieb notwendig ist.

Es ist vorteilhaft, wenn die Rollen geerdet sind. Somit kann die statische Ladung durch den vielfachen Kontakt mit den geerdeten Rollen verringert werden. Daher wird die Haftung der Verschmutzungspartikel an den Preforms verringert, so dass der Schmutz besser nach unten durch die Rutsche entfernt werden kann.

Gemäß einer bevorzugten Ausführungsform ist die Rutsche am Boden eines Rahmens angeordnet, der in einer Vorderseite einen Öffnungsbereich aufweist, der mit dem Inneren des Vorratscontainers verbunden ist. Vorzugsweise ist an der gegenüberliegenden Rückseite des Rahmens ein Öffnungsbereich vorgesehen, der zu dem Abförderer führt. Die Rutsche kann auf einfache Art und Weise durch den Vorratscontainer und den Abförderer gehalten werden, ohne dass ein extra Gestell für die Rutsche notwendig ist. Die Rutsche kann somit einfach und kostengünstig in das System integriert werden.

Vorteilhafterweise ist der Abförderer ein Aufwärtsförderer, wobei dann nach dem Aufwärtsförderer Z.B. ein Rollensortierer vorgesehen sein kann, um die bislang ungeordneten Preforms in eine Einzelreihe zu bringen. Ebenso denkbar ist anstelle des Abförderers einen Vorratsbehälter oder ein Silo einzusetzen.

Es ist vorteilhaft, wenn mehrere Reihen von hintereinander in Transportrichtung angeordneten Rollen nebeneinander angeordnet sind.

Die vorliegende Erfindung wird nachfolgend unter Bezugnahme der folgenden Zeichnungen näher erläutert.
- Fig. 1: ist eine schematische Darstellung einer Vorrichtung gemäß einem Ausführungs- beispiel der vorliegenden Erfindung.
- Fig. 2: zeigt in perspektivischer Darstellung eine Rutsche gemäß der vorliegenden Erfin- dung.
- Fig. 3: zeigt in perspektivischer Darstellung die in Fig. 2 gezeigte, in einen Rahmen in- tegrierte Rutsche.
- Fig. 4: zeigt grob schematisch die einzelnen Stationen vom Vorratscontainer zur Blas- station.
- Fig. 5: zeigt schematisch ein weiteres Ausführungsbeispiel gemäß der vorliegenden Er- findung.

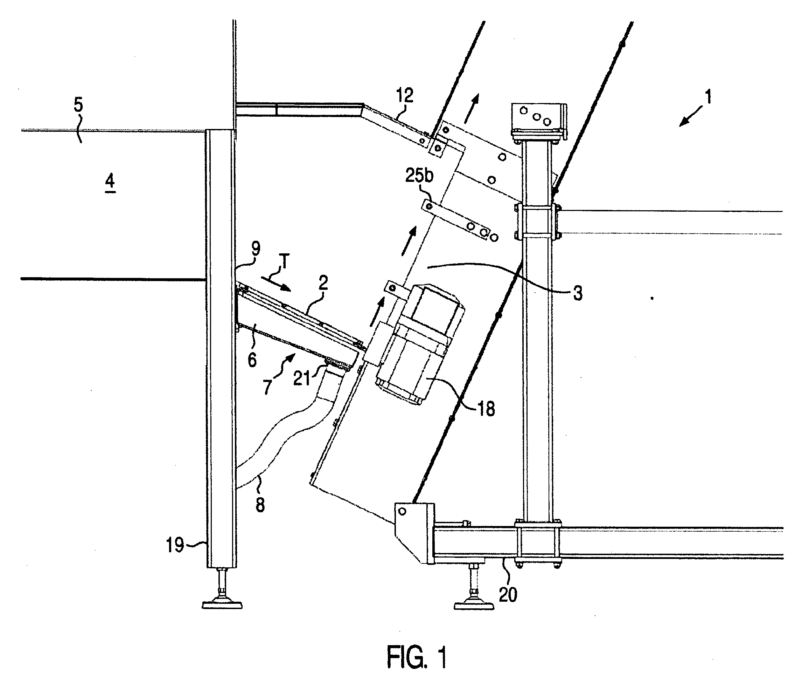

Fig. 1 zeigt schematisch eine Vorrichtung gemäß der vorliegenden Erfindung. Die Vorrichtung 1 umfasst einen Vorratscontainer 5. Die Befüllung des Vorratscontainers erfolgt direkt schüttend aus den Lieferpackungen. Der Vorratscontainer 5 wird beispielsweise über ein Gestell 19 gehalten und steht auf entsprechenden Standbeinen. Der Vorratscontainer 5 weist an seinem unteren Ende eine Öffnung 9 auf, über die das Innere 4 des Vorratscontainers mit der Rutsche 2 verbunden ist. Der Boden des Containers 5 ist vorzugsweise zu der Öffnung 9 hin geneigt, so dass die Preforms automatisch zur Öffnung 9 rutschen. Die Öffnung 9 weist eine Höhe auf die ermöglicht dass nicht zu viele Preforms auf einmal aus dem Container rutschen und beträgt etwa das 2 - 8 fache des Preformdurchmessers.

Über die Rutsche 2 können die Preforms in Richtung des Abförderers 3 hinabrutschen. Der Neigungswinkel α der Rutsche 2 zur Vertikalen liegt in einem Bereich von 100 bis 135 Grad. Die Rutsche 2 weist Durchgangsöffnungen 11 auf, so dass Schmutz und Performgrad durch die Durchtrittsöffnungen 11 nach unten fallen können. Die Öffnungen 11 sind so bemessen, dass die Preforms nicht durchfallen können und weisen aber eine Mindestabmessung (Breite Länge oder Durchmesser) von 1 mm auf.

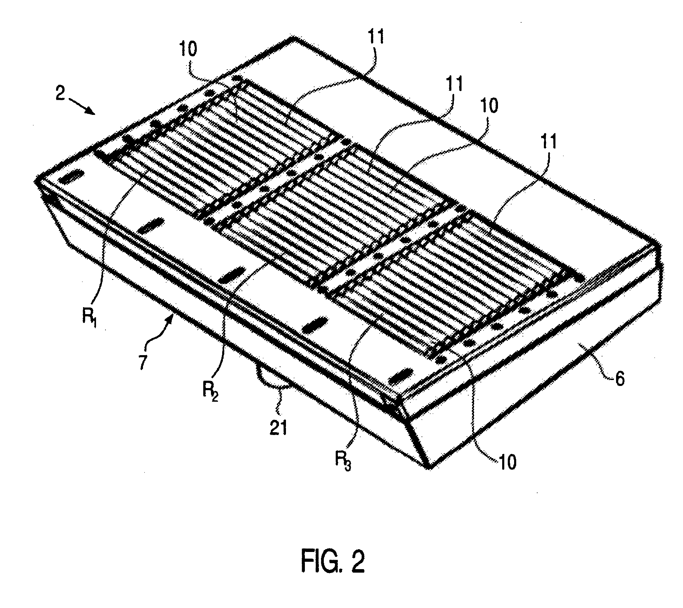

Bei diesem Ausführungsbeispiel sind die Durchgangsöffnungen 11 zwischen nebeneinander angeordneten Rollen 10 ausgebildet, wie insbesondere aus Fig. 2 zu erkennen ist. Die Rollen weisen beispielsweise einen Außendurchmesser von 5 mm bis 30 mm auf. Die auf einen festen Abstand eingestellten Rollen 10, welcher sich ergibt aus dem Rollendurchmesser und der Öffnung 11, ermöglichen, ähnlich wie ein Sieb, der Verschmutzung nach unten zu entweichen, während die Preforms weiterhin zum Abförderer 3 gelangen. Die Rollen 10 können frei drehbar gelagert sein oder angetrieben werden. Vorteilhafterweise ist die Achse, um die sich die Rollen 10 drehen, quer zur Transportrichtung T der Preforms auf der Rutsche 2 angeordnet. Somit werden die Rollen durch die herabrutschenden Preforms angetrieben. Durch die Rollen werden die Preforms aktiv bewegt, wodurch der Schmutz aus dem Inneren der Preforms besser ausgebracht werden kann.

Bei dem in Fig. 2 gezeigten Ausführungsbeispiel gibt es mehrere Reihen, hier drei, R1, R2, R3, von hintereinander in Transportrichtung T angeordneten Rollen 10, wobei die Reihen nebeneinander angeordnet sind. Unterhalb der Rutsche 2 ist eine Absaugung 7 vorgesehen. Hier umfasst die Absaugung 7 den Absaugschacht 6, der unterhalb der Rutsche 2 dichtend angebracht ist. Der Absaugschacht 6 befindet sich mindestens unterhalb der Durchgangsöffnungen 11. Der Schacht 6 umfasst einen Ansaugstutzen 21, der mit einer Absaugleitung 8 verbunden ist, die zu einer entsprechenden Absaugpumpe führt. Der Schacht 6 kann zu Reinigungszwecken von der Rutsche 2 entfernt werden. Die Absaugung 7 verbessert das Ausbringen der Verschmutzung, indem sie die aufgrund statischer Ladung der Preforms induzierte Haftkraft der Verschmutzungspartikel überwindet.

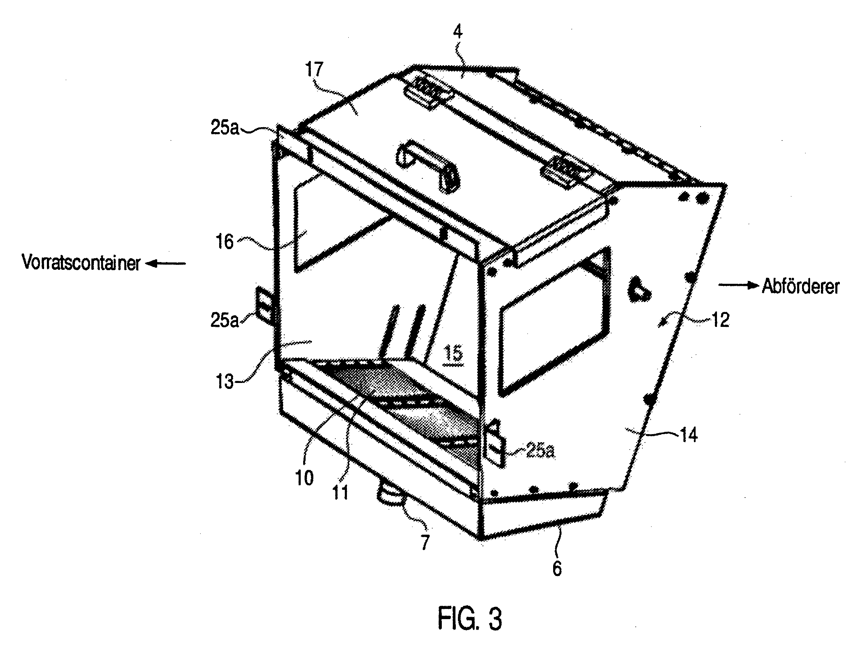

Vorteilhafterweise sind die Rollen geerdet, wobei die Masseführung in den Figuren nicht extra dargestellt ist. Somit kann die statische Ladung der Preforms durch den vielfachen Kontakt mit den geerdeten Rollen 10 verringert werden. Die Preforms sind auf der Rutsche 2 in noch ungeordnetem Zustand. Vom unteren Ende der Rutsche 2 aus gelangen die Preforms im ungeordneten Zustand auf einen Abförderer 3. Hier ist der Abförderer 3 ein Aufwärtsförderer, der die Preforms in noch ungeordnetem Zustand, wie durch die Pfeile dargestellt, zu dem oberen Ende eines Rollensortierers führt. Mit 18 ist ein Motor des Aufwärtsförderers bezeichnet. Der Aufwärtsförderer ist hier nur schematisch dargestellt und kann beispielsweise wie folgt ausgebildet sein: An den beiden Seiten befinden sich Seitenteile, vorzugsweise bekantete Bleche, welche durch Distanzstreben miteinander verbunden sind. An den Distanzstreben sind Führungen befestigt, welche ein beispielsweise stollenartiges Endlosband am Durchhang hindern. Am Anfang und am Ende des Förderers befinden sich gelagerte Rollen, die das Endlosband spannen und ein Geradelauf eingestellt werden kann. Eine der beiden Rollen ist mit einem Antrieb 18 über ein Getriebe verbunden. Diese Konstruktion ist auf einem Tragegestellt 20 montiert. Wie insbesondere aus Fig. 3 hervorgeht, ist hier die Rutsche 2 am Boden eines Rahmens 12 angeordnet. Der Rahmen 12 hat hier zwei parallel zueinander angeordnete Seitenwandungen 14 und eine dem Boden gegenüberliegende obere Wandung 4. In der dem Boden gegenüberliegenden oberen Wandung 4 ist eine Klappe 17 vorgesehen, die geöffnet werden kann. In den Seitenwandungen 14 sind z.B. Öffnungen 16 mit Schaugläsern vorgesehen.

Vorteilhafterweise kann nun die Rutsche 2 bzw. hier der Rahmen 12 ohne eigenes Tragegestell zwischen dem Vorratscontainer 5 und dem Abförderer 3 befestigt werden. Dazu sind entsprechende Befestigungseinrichtungen vorgesehen, wie beispielsweise die in Fig. 3 gezeigten Winkel 25a bzw. die in Fig. 1 gezeigten Befestigungsmittel 25b. Der Rahmen 12 weist an seiner Vorderseite eine Öffnung 13 auf, die sich mit der Öffnung 9 des Vorratscontainers 5 überschneidet, so dass die Preforms aus dem Inneren des Vorratscontainers 5 auf die Rutsche 2 gelangen können. Auch an der Rückseite des Rahmens 17 ist eine Öffnung 15 vorgesehen, so dass die Preforms über die Öffnung dem Abförderer zugeführt werden können (siehe Fig. 3).

Der in Fig. 3 gezeigte Rahmen ist nur ein Beispiel, wie die Rutsche 2 zwischen Vorratscontainer 5 und Abförderer 3 befestigt werden kann. Wesentlich bei diesem Ausführungsbeispiel ist lediglich, dass die Rutsche 2 durch Vorratscontainer 5 und Abförderer 3 gehalten werden kann.

Bei diesem Ausführungsbeispiel sind die Durchgangsöffnungen 11 zwischen den Rollen 10 ausgebildet.

Es ist jedoch auch möglich, die Rutsche 2 durch ein Lochblech oder ein geschlitztes Blech oder Gitterstäbe zu ersetzen. Diese Variante ist einfacher und kostengünstiger. Jedoch kann bei der Rollenlösung der Schmutz leichter durch die Bewegung der Preforms aus dem Inneren der Preforms abgeführt werden.

Es ist auch möglich, zusätzlich eine Rütteleinrichtung (nicht dargestellt) vorzusehen, die die Rutsche 2 mechanisch rüttelt, d.h. hin und her und/oder auf und ab bewegt oder in Vibrationen versetzt. Dies verbessert wiederum das Austragen von Schmutz.

Das erfindungsgemäße Verfahren wird nachfolgend unter Bezugnahme der Figuren näher erläutert.

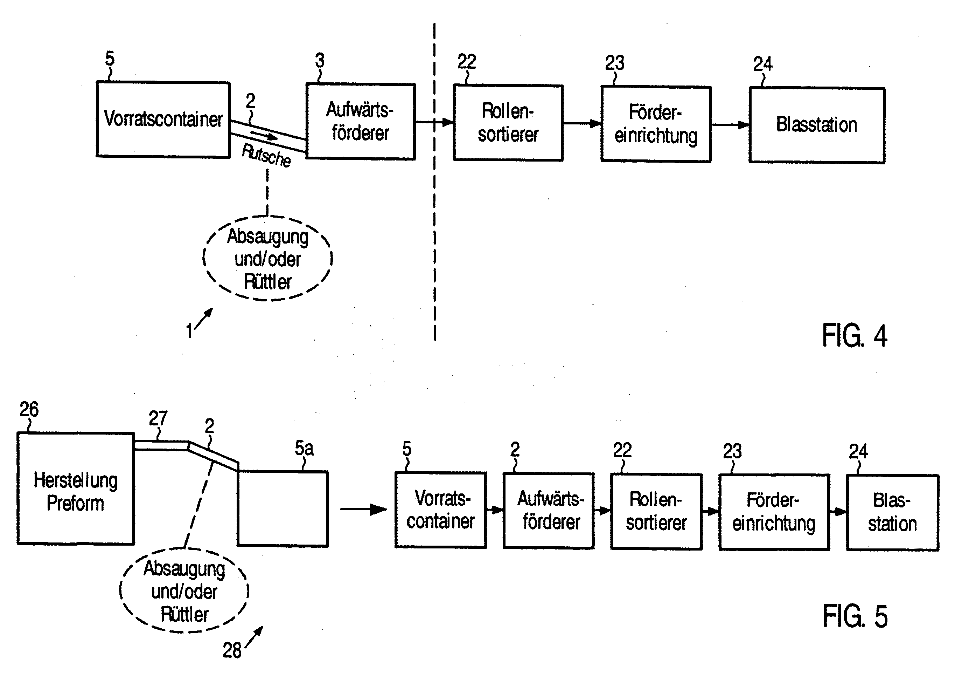

Zunächst werden die Preforms dem Vorratscontainer 5 zugeführt. Über die Öffnung 9 im Vorratscontainer 5 gelangen die Preforms in ungeordnetem Zustand auf die Rutsche 2 und rutschen in Transportrichtung T in Richtung Abförderer 3. Hier kann Schmutz und Preformgrad durch die Durchtrittsöffnungen 11 nach unten fallen. Zusätzlich kann der Schmutz über die Absaugung 7 von den Preforms in wirksamer Art und Weise "abgesaugt" werden. Der Schmutz bleibt in dem Schacht 6 liegen oder wird über den Anschlussstutzen 21 und die Leitung 8 abgesaugt. Der Stutzen 21 für die Absaugungsleitung 8 befindet sich im unteren Endbereich des Schachts 6, so dass Schmutz aus dem ebenfalls geneigten Schacht 6 nachrutschen kann und über die Leitung 8 abgesaugt werden kann. Durch die Bewegung der Preforms werden die Rollen 10 gedreht, so dass durch die aktive Bewegung auch Schmutz aus dem Inneren gut entfernt werden kann. Durch den Kontakt mit den Rollen wird die statische Ladung der Preforms verringert. Die Preforms gelangen dann von der Rutsche 2 zum Abförderer 3, hier dem Aufwärtsförderer 3, und werden in noch ungeordneter Form hintereinander z.B. zum oberen Ende eines Rollensortierers 22 gefördert. Der Rollensortierer bringt die ungeordneten Rollen in eine Reihe. Der Aufbau eines Rollensortierers ist beispielsweise in der DE 20308513 näher erläutert. Vom Rollensortierer aus werden die Preforms dann wie aus Fig. 4 hervorgeht über eine Fördereinrichtung 23 einer Blasstation 24 zugeführt, in der in bekannter Weise aus den Preforms Flaschen bzw. Behälter geblasen werden. Bei den in Fig. 4 gezeigten Hauptstationen, die nach dem Aufwärtsförderer 3 angeordnet sind, handelt es sich nur um ein Beispiel.

Figur 5 zeigt eine weitere Ausführungsform der vorliegenden Erfindung. Auch hier ist, genauso wie im ersten Ausführungsbeispiel, auf dem Transportweg 28 bzw. einer Teilstrecke des Transportwegs 28, die in Zusammenhang mit dem ersten Ausführungsbeispiel erläuterte Rutsche 2 vorgesehen. Die Rutsche 2 ist so ausgebildet und geneigt, wie es im ersten Ausführungsbeispiel gezeigt ist. In einer Einrichtung zum Herstellen der Preforms 26 werden die Preforms hergestellt und über eine Transporteinrichtung 27, beispielsweise ein Förderband zu der Rutsche 2, gefördert. Über die Rutsche 2 rutschen die Preforms dann in den Vorratscontainer 5a bzw. Silo 5a. Wie zuvor beschrieben, kann dann auch über die Öffnungen in der Rutsche 2 Schmutz nach unten fallen und, wie zuvor beschrieben, abgeführt werden. Somit kann der Schmutz nicht weiter in Transportrichtung zu der Blasmaschine transportiert werden. Der Vorratscontainer 5a wird dann, wie durch den Pfeil in Figur 5 angedeutet, z. B. aus einem Werk, in dem die Preforms hergestellt werden, zu einem Werk, in dem die Behälter geblasen werden, transportiert. Selbstverständlich können die Preforms auch in einem Werk hergestellt und weiter verarbeitet werden. Nach dem in Figur 5 dargestellten Pfeil können die Preforms entweder in den Vorratscontainer 5 geschüttet werden oder aber der Vorratscontainer 5a in Figur 5 dient als Vorratscontainer 5, und wird so aufgestellt, dass aus ihm, mit Hilfe des Abförderers bzw. Aufwärtsförderers 3, wie auch in Zusammenhang mit Figur 4 beschrieben, die Preforms zur Blasstation gefördert werden.

Auch wenn es nicht explizit beschrieben ist, wäre es auch vorstellbar, dass beispielsweise die Preforms über eine Rutsche 2 von dem Vorratscontainer 5a in den Vorratscontainer 5 rutschen und somit der Schmutz ausgetragen wird.

### Bezugszeichenliste

- 1: Vorrichtung zum Zuführen von Preforms
- 2: Rutsche
- 3: Abförderer (Aufwärtsförderer)
- 4: Obere Wandung
- 5: Vorratscontainer
- 6: Schacht für Schmutz
- 7: Absaugung
- 8: Absaugleitung
- 9: Öffnung im Container
- 10: Rollen
- 11: Durchtrittsöffnungen
- 12: Rahmen
- 13: Vorderöffnung
- 14: Seitenwandung
- 15: Hinteröffnung
- 16: Öffnung in Seitenwandung
- 17: Klappe
- 18: Motor
- 19: Gestell
- 20: Gestell
- 21: Absaugstutzen
- 22: Rollensortierer
- 23: Fördereinrichtung
- 24: Blasmaschine
- 25: Halterung
- 26: Herstellung Preform
- 27: Fördereinrichtung
- 28: Transportweg

## Patentansprüche

1. Vorrichtung (1) zum Zuführen von Preforms in Richtung einer Blasmaschine (24) wobei auf dem Transportweg (28) zur Blasmaschine (24) eine geneigte Rutsche (2) vorgesehen ist, die mehrere Durchgangsöffnungen (11) aufweist, so dass Schmutz und Preformgrad durch die Durchtrittsöffnungen nach unten fallen kann, und wobei die Rutsche (2) zumindest teilweise als Gitter, insbesondere Lochblech oder geschlitztes Blech, ausgebildet ist, oder die Durchgangsöffnungen (11) zwischen drehbaren Rollen (10) ausgebildet sind.

2. Vorrichtung (1) zum Zuführen von Preforms in Richtung einer Blasmaschine (24) nach Anspruch 1, **dadurch gekennzeichnet, dass** die Vorrichtung umfasst:
einen Vorratscontainer (5) für die Preforms und einem Abförderer (3) für die Preforms, wobei die geneigte Rutsche (2) zwischen dem Vorratscontainer (5) und dem Abförderer (3) vorgesehen ist.

3. Vorrichtung (1) zum Zuführen von Preforms in Richtung einer Blasmaschine (24) nach Anspruch 1, **dadurch gekennzeichnet, dass** die Vorrichtung umfasst:
einen Zuförderer (27) für die Preforms und einen Vorratscontainer (5a) für die Preforms, und, dass
zwischen dem Zuförderer (27) und dem Vorratscontainer (5a) die geneigte Rutsche (2) vorgesehen ist.

4. Vorrichtung nach mindestens einem der Ansprüche 1 bis 3, **dadurch gekennzeichnet, dass** unterhalb der Rutsche (2) eine Absaugung (7) angeordnet ist.

5. Vorrichtung nach mindestens einem der Ansprüche 1 bis 4, **dadurch gekennzeichnet, dass** die Vorrichtung eine Rütteleinrichtung umfasst, die die Rutsche (2) rüttelt.

6. Vorrichtung nach Anspruch 1, **dadurch gekennzeichnet, dass** die Rollen (10) sich jeweils um eine Achse, die quer zur Transportrichtung (T) der Preform verläuft, drehen.

7. Vorrichtung nach mindestens einem der Ansprüche 1 bis 6, **dadurch gekennzeichnet, dass** die Rollen (10) geerdet sind.

8. Vorrichtung nach Anspruch 2, **dadurch gekennzeichnet, dass** die Rutsche (2) am Boden eines Rahmens (12) angeordnet ist, der an einer Vorderseite einen Öffnungsbereich (13) aufweist, die mit dem Inneren des Vorratscontainers (5) verbunden ist und vorzugsweise an der gegenüberliegenden Rückseite einen Öffnungsbereich (15) aufweist, der zum Abförderer (3) führt.

9. Vorrichtung nach mindestens einem der Ansprüche 2 oder 8, **dadurch gekennzeichnet, dass** der Abförderer (3) ein Aufwärtsförderer ist.

10. Vorrichtung nach mindestens einem der Ansprüche 2, 8 oder 9, **dadurch gekennzeichnet, dass** nach dem Abförderer (3) ein Rollensortierer (22) vorgesehen ist, um die Preforms in eine Einzelreihe zu bringen.

11. Vorrichtung nach Anspruch 1, **dadurch gekennzeichnet, dass** mehrere Reihen (R1,R2,R3) von hintereinander in Transportrichtung angeordneten Rollen (10) nebeneinander angeordnet sind.

12. Verfahren zum Zuführen von Preforms in Richtung einer Blasmaschine (24), wobei die Preforms auf ihrem Transportweg zur Blasmaschine (24) über eine geneigte Rutsche (2), die mehrere Durchgangsöffnungen (11) aufweist, rutschen, derart, dass Schmutz und Preformgrad durch die Durchtrittsöffnungen (11) nach unten fällt.

13. Verfahren zum Zuführen von Preforms in Richtung einer Blasmaschine (24) nach Anspruch 12, wobei die Preforms zwischen einem Vorratscontainer (5) und einem Abförderer (3) oder zwischen einem Zuförderer (26) und einem Vorratscontainer (5a) über die geneigte Rutsche (2) rutschen.

## Claims

1. Device (1) for transporting preforms towards a blow moulding machine (24) wherein there is a tilted chute (2) on the transport path (28) to the blow moulding machine (24) with several passage openings (11) so that dirt and the loose flashing from the preform can fall down through the openings, and wherein the chute (2) is at least partly constructed as a grid, in particular perforated metal or slit metal, or the openings (11) are formed between rotating rollers (10).

2. Device (1) for transporting preforms towards a blow moulding machine (24) according to claim 1, **characterised in that** the device contains:
a storage container (5) for the preforms and a removal conveyor (3) for the preforms,
wherein the tilted chute (2) is between the storage container (5) and the removal conveyor (3).

3. Device (1) for transporting preforms towards a blow moulding machine (24) according to claim 1, **characterised in that** the device contains:
a feed conveyor (27) for the preforms and a storage container (5a) for the preforms,
and that
the tilted chute (2) is between the feed conveyor (27) and the storage container (5a).

4. Device according to at least one of claims 1 to 3, **characterised in that** suction (7) is arranged underneath the chute (2).

5. Device according to at least one of claims 1 to 4, **characterised in that** the device contains a vibrating component which makes the chute (2) vibrate.

6. Device according to claim 1, **characterised in that** the rollers (10) rotate on an axis that runs obliquely to the direction of transport (T) of the preform.

7. Device according to at least one of claims 1 to 6, **characterised in that** the rollers (10) are earthed.

8. Device according to claim 2, **characterised in that** the chute (2) is arranged at the base of a frame (12) which has an opening area (13) on its front face which is linked to the interior of the storage container (5) and preferably also has an opening area (15) on the reverse opposite which leads to the feed conveyor (3).

9. Device according to at least one of claims 2 or 8, **characterised in that** the removal conveyor (3) is an elevating conveyor.

10. Device according to at least one of claims 2, 8 or 9, **characterised in that** following the removal conveyor (3) there is a roller selector (22) to bring the preforms into one single row.

11. Device according to claim 1, **characterised in that** several rows (R1, R2, R3) are arranged side by side by rollers (10) arranged one behind the other in the direction of transport.

12. Procedure for transporting preforms towards a blow moulding machine (24), wherein the preforms on their transport path towards the blow moulding machine (24) slide on a tilted chute (2) with several passage openings (11) in such a way that dirt and loose flashing from the preform fall down through the openings (11).

13. Procedure for transporting preforms towards a blow moulding machine (24) according to claim 12, wherein the preforms slide between a storage container (5) and a removal conveyor (3) or between a feed conveyor (26) and a storage container (5a) on the tilted chute (2).

## Revendications

1. Dispositif (1) pour l'amenée de préformes en direction d'une machine de soufflage (24),
dans lequel, sur le parcours de transport (28) à la machine de soufflage (24), il est prévu une rampe de glissement (2) inclinée, qui présente plusieurs ouvertures de passage (11), de manière à ce que des crasses et des bavures de préformes puissent tomber vers le bas à travers les ouvertures de passage, et
dans lequel la rampe de glissement (2) est réalisée au moins en partie sous la forme d'un treillis, notamment sous la forme d'une tôle perforée ou d'une tôle à fentes, ou bien les ouvertures de passage (11) sont formées entre des rouleaux (10) rotatifs.

2. Dispositif (1) pour l'amenée de préformes en direction d'une machine de soufflage (24), selon la revendication 1, **caractérisé en ce que** le dispositif comprend :
un conteneur de réserve (5) pour les préformes, et un transporteur d'évacuation (3) pour les préformes, la rampe de glissement (2) inclinée étant prévue entre le conteneur de réserve (5) et le transporteur d'évacuation (3).

3. Dispositif (1) pour l'amenée de préformes en direction d'une machine de soufflage (24), selon la revendication 1, **caractérisé en ce que** le dispositif comprend :
un transporteur d'amenée (27) pour les préformes et un conteneur de réserve (5a) pour les préformes,
et **en ce que**
la rampe de glissement (2) inclinée est prévue entre le transporteur d'amenée (27) et le conteneur de réserve (5a) .

4. Dispositif selon l'une au moins des revendications 1 à 3, **caractérisé en ce que** sous la rampe de glissement (2) est agencé un système d'aspiration (7).

5. Dispositif selon l'une au moins des revendications 1 à 4, **caractérisé en ce que** le dispositif comprend un système de mise en vibration, qui produit la mise en vibration de la rampe de glissement (2) .

6. Dispositif selon la revendication 1, **caractérisé en ce que** les rouleaux (10) tournent chacun autour d'un axe, qui s'étend transversalement à la direction de transport (T) de la préforme.

7. Dispositif selon l'une au moins des revendications 1 à 6, **caractérisé en ce que** les rouleaux (10) sont mis à la terre.

8. Dispositif selon la revendication 2, **caractérisé en ce que** la rampe de glissement (2) est agencée sur le fond d'un châssis (12) qui présente, sur un côté avant une zone d'ouverture (13) reliée à l'intérieur du conteneur de réserve (5), et présente de préférence sur le côté arrière opposé, une zone d'ouverture (15) conduisant au transporteur d'évacuation (3).

9. Dispositif selon l'une au moins des revendications 2 ou 8, **caractérisé en ce que** le transporteur d'évacuation (3) est un transporteur-élévateur.

10. Dispositif selon l'une au moins des revendications 2, 8 ou 9, **caractérisé en ce qu'**après le transporteur d'évacuation (3), il est prévu un dispositif à assortir à rouleaux (22) pour amener les préformes dans une rangée individuelle.

11. Dispositif selon la revendication 1, **caractérisé en ce que** plusieurs rangées (R1, R2, R3) de rouleaux (10) agencés les uns derrière les autres dans la direction de transport, sont disposées côte à côte.

12. Procédé pour l'amenée de préformes en direction d'une machine de soufflage (24), d'après lequel les préformes, sur leur parcours de transport vers la machine de soufflage (24), glissent par-dessus une rampe de glissement (2) inclinée, qui présente plusieurs ouvertures de passage (11), de manière à ce que des crasses et des bavures de préformes tombent vers le bas à travers les ouvertures de passage (11).

13. Procédé pour l'amenée de préformes en direction d'une machine de soufflage (24), selon la revendication 12, d'après lequel les préformes glissent sur la rampe de glissement (2) inclinée, entre un conteneur de réserve (5) et un transporteur d'évacuation (3), ou bien entre un transporteur d'amenée (26) et un conteneur de réserve (5a).
